# EUROPEAN PATENT APPLICATION

(11) **EP 4 761 230 A1**
(43) Date of publication of application: **17.06.2026**
(21) Application number: 25222436.5
(22) Date of filing: 11.12.2025
(51) Int. Cl.: H04N 1/60

(54) **METHOD FOR CALIBRATION OF A PRINT MODULE, CONVERTING UNIT, AND PRINTED PAPERBOARD WEB**

(30) Priority: 12.12.2024 EP 24219414
(71) Applicant: Tetra Laval Holdings & Finance S.A., 1009 Pully (CH)
(72) Inventor: TARCZAL, Ferenc, 221 86 Lund (SE); OLSSON, Sverker, 221 86 Lund (SE)
(74) Representative: Tetra Pak Patent Attorneys

(57) **Abstract**

Method for closed loop calibration of a digital print module (20), the method comprising:
feeding (S2) a printed paperboard web (10) continuously in a machine direction (MD),
capturing (S3) actual measured Lab values (32) of a test subsection (12) of the paperboard web (10), wherein the test subsection (12) forms part of a final décor of the paperboard web (10) and of a packaging container being produced by the paperboard web (10),
determining (S4) a delta between the actual measured Lab values (32) and a targeted Lab set (31),
calibrating (S5) the digital print module (20) based on the delta between the actual measured Lab values (32) and the targeted Lab set (31).

## Description

### Technical Field

The invention relates to a system and method for calibration of a print module, and to a printed paperboard web obtainable by calibration of a print module.

### Background Art

Packaging containers of the single use disposable type for liquid foods are often produced from a laminated packaging material. The laminated packaging material is produced as a continuous web, which is either used in a roll-fed filling machine or cut into separate blanks for use in a blank-fed packaging machine.

The laminated packaging material is produced using a converting procedure in which multiple materials are joined and processed to form the ready-to-use web of laminated packaging material.

During the converting process a paperboard web, forming the core layer of the laminated packaging material, may be digitally preprinted underneath the décor laminate layer or alternatively on the top of the décor laminate (i.e., the side intended as the exterior side of the laminated packaging material) for example by ink-jet printing.

Digital printers may suffer from wear and tear, or other in use aspects providing defects like change in color, i.e., color delta, over time, which may result in non-compliance to defined color targets. Regular calibration of the print module is necessary in order to ensure a desired print quality performance of the digital printing process.

Commonly, color calibrations are done by a predefined frequency, measuring printed samples offline, loading data into a color management module, and recalibrating the print module to remain consistent. Offline calibration is time consuming and reducing the overall efficiency of the printing process due to that the press cannot be in production mode during calibration process. As a consequence, the calibrations may be performed more seldom than desirable, perhaps monthly or quarterly. Efficiency & production capacity may be prioritized over quality therefore calibrations often may be omitted or frequency reduced below the required minimum to obtain robust production quality performance.

Thus, there is a need in the art for improvements of the calibration-process for digital printer modules used for printing laminated packaging material webs.

### Summary

It is an object of the invention to at least partly overcome one or more of the above-identified limitations of the prior art. In particular, it is an object to provide an in-line, continuous, closed loop calibration of a printer module. This object is at least partly addressed by means of color management, herein sometimes referred to as CM. Color management is described as the process of ensuring consistent and accurate colors across various devices, such as monitors, printers, and cameras. Different devices may have different color capabilities and characteristics. For example, a monitor may display colors differently than a printer can reproduce them, and the colors of a capture of the print may be reproduced in yet another way, leading to inconsistencies and inaccuracies throughout a process. Further, the color capabilities and characteristics of a device, such as a printer, may change over time, i.e., delta from the original characteristics. To achieve color management, a color profile may be created for each device involved in the color workflow. A color profile may be defined as a set of data that characterizes a color space, a color input device, or a color output device. Color profiles may adhere to standards promulgated by the International Color Consortium and may sometimes be referred to as ICC profiles. Color profiles may be described by the color attributes of a particular device. The devices consist of source device and target device where the source device is the actual output device/printing press, and the target device is the color attribute to achieve. By mapping the delta between a source-e and target color space we can create a profile connection space, PCS. A color space may be defined as a specific selection of colors. In printing related processes and techniques, it is common to create colors with color spaces based on the CMYK color model, using the subtractive primary colors of pigment (cyan, magenta, yellow, and black). To create a three-dimensional representation of a given color space, where L represent the lightness, a represent the Red & Green axis and b represents the Yellow & Blue axis, commonly known as Lab Color Space. The resulting 3-D space provides a unique position for every possible color that can be created by combining the used printing inks for example CMYK. The color profile does describe the device's color capabilities and characteristics, such as its color gamut. The color profiles may then be used to translate colors between devices or image files, facilitating consistent and accurate color reproduction. Color management may enable a maintained color consistency over time and throughout an entire workflow, from displaying an image, to printing it, capturing it, displaying the captured image etc.

According to an aspect, a method for closed loop calibration of a digital print module is provided. The method comprises feeding a printed paperboard web continuously in a machine direction, capturing actual measured Lab values of a test subsection of the paperboard web, wherein the test subsection forms part of a final décor of the paperboard web and of a packaging container being produced by the paperboard web, determining a delta between the actual measured Lab values and a targeted Lab set, and calibrating the digital print module based on the delta between the actual measured Lab values and the targeted Lab set.

The method may further comprise printing the paperboard web continuously using the digital print module, wherein the step of printing and feeding the paperboard web is performed simultaneously while calibrating the digital print module.

The targeted Lab set may be used as input to the digital print module during the step of printing.

Calibrating the digital print module may comprise performing color management based on the delta between the actual measured Lab values and the targeted Lab set. The calibration of the digital print module may comprise performing color conversion on the input print design data, using color management module, based on the delta between the actual measured Lab values and the targeted Lab set.

The method may further comprise capturing the targeted Lab set of a reference subsection of the paperboard web, wherein the reference subsection forms part of a final décor of the paperboard web and of a packaging container being produced by the paperboard web.

The targeted Lab set may be computer generated and/or computer modified.

According to another aspect, a converting unit is provided. The converting unit is configured to continuously manufacture a laminated packaging material. The converting unit comprises a digital print module configured to print a paperboard web, a feeding unit configured to continuously forward the printed paperboard web in a machine direction, an inspection unit configured to capture actual measured Lab values of a test subsection of the paperboard web, wherein the test subsection forms part of a final décor of the paperboard web and of a packaging container being produced by the paperboard web, and to determine a delta between the actual measured Lab values and a targeted Lab set, wherein the digital print module is configured to be calibrated based on the delta between the actual measured Lab values and the targeted Lab set.

The inspection unit may be further configured to capture the targeted Lab set.

The targeted Lab set may correspond to a reference subsection of the paperboard web.

The reference subsection may form part of a final décor of the paperboard web and of a packaging container being produced by the paperboard web.

The converting unit may further comprise a color management module configured to perform color management based on the delta between the actual measured Lab values and the targeted Lab set.

According to a further aspect, a digitally printed paperboard web for forming a laminated packaging material is provided. The paperboard web is obtainable by closed loop calibration of a digital printer module used for printing the paperboard web using the method of a previous aspect and/or the converting unit according to a previous aspect, wherein a first deviation between a first and second section of the paperboard web is used to calibrate the printer module such that a second deviation between the first and a third section of the paperboard web is smaller than the first deviation.

According to an aspect, a method for closed loop calibration of a digital print module is provided. The digital print module may comprise a digital printer, such as an ink-jet printer. The method comprises feeding a printed paperboard web continuously in a machine direction. The method further comprises setting up a targeted Lab set for the different measuring elements/color patches of a test subsection of the paperboard web. The actual measured Lab values may be captured by a capturing device such as a camera, for instance an inline press inspection camera. The test subsection may refer to a section later used as a blank from which a package is formed, or the test subsection may refer to a larger or smaller section, such as an area of the printed paperboard web comprising a set of color control marks. The method further comprises determining a delta between the actual measured Lab values and the targeted Lab set. The targeted Lab set represents a set of targets to consistently maintain on the printing press.

The determined delta indicates if calibration is necessary in order to achieve optimal print performance. The method further comprises calibrating the digital print module based on the delta between the targeted Lab set and the actual measured Lab values. Advantageously, this new method enables to be performed in-line, while the print process is ongoing, as opposed to offline where the production would have to be stopped during calibration. In other words, a printing or conversion method comprising the calibration method can be continuous. The step of capturing the actual measured Lab values may be a live measurement which may be instantaneously loaded into an application configured to determine the delta and calibrate the print module in a closed loop. Hence, the calibration method described herein is time and cost efficient. Further, as the method can be performed during production, the delta in between regular offline calibration intervals may be captured earlier and corrected reducing quality waste. Beneficially, the method enables real time compensation of color deviations, in a much higher frequency than previously known techniques.

According to an embodiment, the method further comprises printing the paperboard web continuously using the digital print module, and the step of printing and feeding the paperboard web is performed simultaneously while calibrating the digital print module.

According to an embodiment, the targeted Lab set is used as input to the digital print module during printing.

According to an embodiment, calibrating the digital print module comprises performing color management based on the delta between the actual measured Lab values and the targeted Lab set.

According to an embodiment the method further comprises capturing the targeted Lab set of a reference subsection of the paperboard web. The targeted Lab set may be captured by a capturing device such as a camera, for instance a web camera.

According to an embodiment, the targeted Lab set is generated by a previously obtained test print production evaluation, profiling, and new target setting.

According to an aspect, a converting unit, configured to continuously manufacture a laminated packaging material, is provided. The converting unit comprises a digital print module configured to print a paperboard web. The print module may comprise a digital printer such as an ink-jet printer. The converting unit further comprises a feeding unit configured to continuously forward the printed paperboard web in a machine direction, preferably at a constant speed, for instance at least 100 m/min, such as 200 m/min or faster, like up to 700 m/min. The converting unit further comprises an inspection unit configured to capture the actual measured Lab values of a subsection of the paperboard web, and to determine a delta between the actual measured Lab values and the target Lab set. The digital print module is configured to be calibrated based on the delta between the target Lab set and the actual measured Lab values. The converting unit may be configured to perform the continuous in-line method for quality inspection described herein and therefore implies all aspects disclosed with regard to that method.

According to an embodiment, the inspection unit is further configured to capture the actual measured Lab values. The inspection unit may comprise a capturing device configured to capture the actual Lab values. Alternatively, the targeted Lab set may be provided to the inspection by other inline or offline means, for instance by a computer or a server.

According to an embodiment, the converting unit further comprises a color management module, CM module, configured to perform color management based on the delta between the targeted Lab set and the actual measured Lab values.

The converting unit may further comprise a creasing station configured to provide a crease line pattern to the printed paperboard web, and/or at least one lamination station configured to laminate at least a further layer to the printed and creased paperboard web.

According to an aspect, a digitally printed paperboard web for forming a laminated packaging material is provided. The printed paperboard web is obtainable by closed loop calibration of the digital printer module used for printing the paperboard web. A first deviation between a first and second section of the paperboard web is used to calibrate the printer module such that a second deviation between the first and a third section of the paperboard web is smaller than the first deviation.

The printed paperboard web for forming the laminated packaging material may be printed by a digital print module being configured to be calibrated by the continuous in-line method for closed loop calibration described herein and therefore implies all aspects disclosed with regard to that method.

All possible features mentioned above should be assumed as valid for all aspects of the invention, as long as being under the scope of the claims. Still other objectives, features, aspects, and advantages of the invention will appear from the following detailed description as well as from the drawings.

### Brief Description of the Drawings

Embodiments of the invention will now be described, by way of example, with reference to the accompanying schematic drawings.
Fig. 1 is a schematic view of a converting unit, including a digital printing module according to an embodiment.
Fig. 2 is a top view of a converting unit including a digital printing module according to an embodiment.
Fig. 3 is a flowchart of a method according to an embodiment.

### Detailed Description

A package, such as a liquid food or beverage container, is formed by folding blanks or a continuous tube-based forming of a laminated packaging material. The packaging material is typically manufactured in a manufacturing unit, such as a converting unit. By a digital print module of the converting unit, a décor is printed onto a substrate which, after a series of process steps, eventually forms part of the laminated packaging material. In the following description, the substrate is referred to as a paperboard material. To mitigate possible color delta, an in-line method and system for closed loop calibration of a digital print module is provided and which will be described in the following.

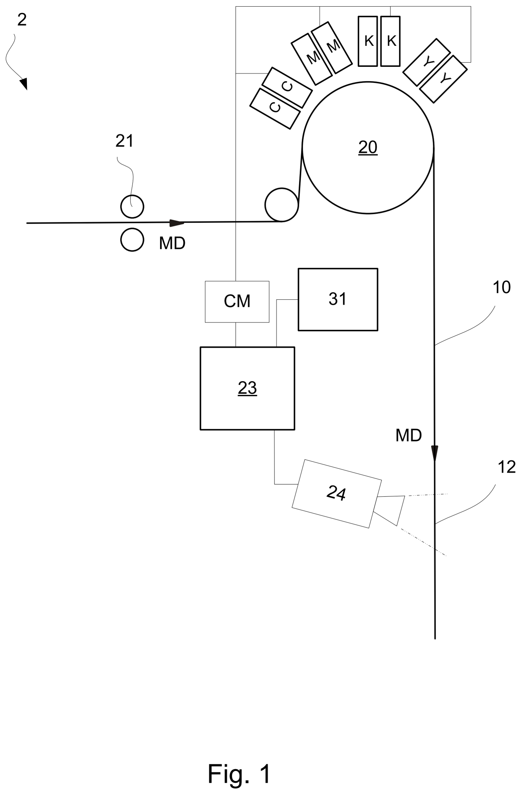

With reference to Fig. 1 a converting unit 2 including a digital printing unit having a digital print module 20 as a part of the converting unit 2, configured to continuously manufacture a laminated packaging material is illustrated. The converting unit 2 comprises at least one feeding unit 21, here illustrated as two feeding rolls. The feeding unit(s) 21 is configured to continuously forward a paperboard web 10 in a machine direction MD, as indicated by the arrow markings in Fig. 1, preferably at a substantially constant speed. The converting unit 2 in the illustrated example further comprises a digital print module 20, here illustrated as an ink-jet printer having a support cylinder and a plurality of print heads for cyan C, magenta M, yellow Y, and black K. It should be noted that the exact configuration of the digital print module 20 may be different depending on the particular application; for example, the converting unit 2, including the digital print module 20, may comprise additional colors, printed by ink-jet or flexographic print units. The digital print module 20 is configured to print a series of images on the paperboard web 10. The series of images may comprise a repeating pattern of the same content, so called static printing, or partial or full package sized variable content, including variable images, text, and codes, one after each other, i.e., dynamic printing.

Typically, the paperboard web 10 is formed by a series of consecutive sections where each section is intended to form an individual packaging container. Each section is thus provided with a printed décor and such décor may in turn be formed by a series of separate graphical elements. A graphical element present on one section is preferably repeated for every section that follows, on the web 10 of packaging material. Such a graphical element may be of pure aesthetic purpose, or it may be associated with one or more control functions of the process involved when producing a paper-based packaging material and/or when producing individual packaging containers from such paper-based packaging material. A graphical element may be static, i.e. it is constant for each and every section, or it may be dynamic, e.g. in the form of a one- or two-dimensional code.

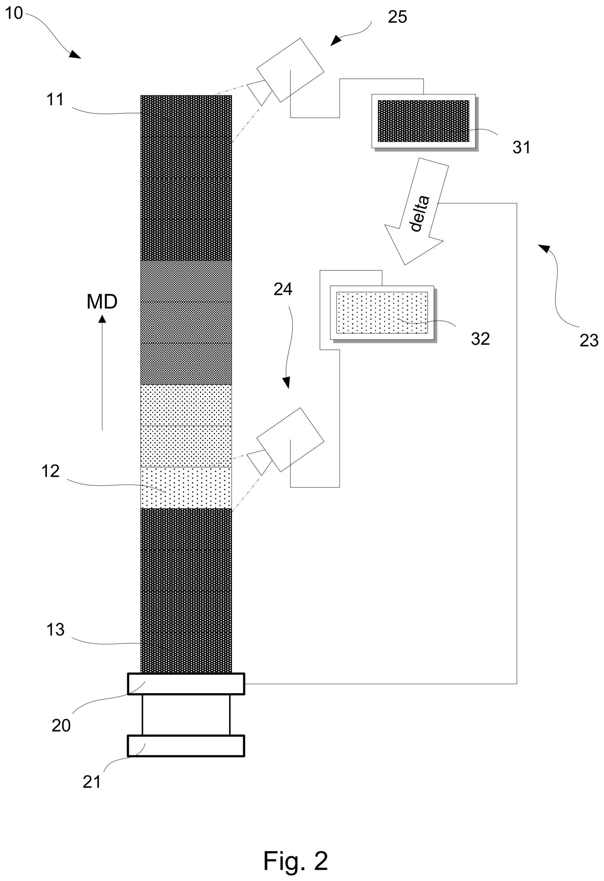

Fig. 2 illustrates the converting unit 2 in a top view. Here, the feeding unit 21 forwards the paperboard web 10 in a machine direction MD, as indicated by an arrow in the figure. The printed paperboard web 10 may be divided into a plurality of paperboard web subsections, preferably separated by crease lines. A subsection may correspond to a section as was described previously, or to a part of such section. The crease lines may for instance be formed in a creasing unit (not illustrated) of the converting unit 2. The subsections may also be referred to as individual printed package intermediates from which packages are to be formed. The subsection 12 illustrated In Fig. 2 may correspond to an individual printed package intermediate, a blank or a specific part of the blank and the package to be formed. Alternatively, the subsection 12 may correspond to a larger section than the individual printed package intermediates or blanks. Commonly, a color control mark is printed on each section of the web. The subsection 12 may correspond to a smaller section than the blanks, comprising the color control mark of the blank.

As illustrated in Fig. 1 and Fig. 2, downstream of the digital print module 20, the converting unit 2 further comprises an inspection unit 23. The inspection unit 23 in the illustrated examples comprises a capturing device 24 configured to capture actual measured Lab values 32 of a subsection 12, or second section 12, of the paperboard web 10. In such example, one specific graphical element may be selected as a subsection 12 of the paperboard web 10 to be monitored. As the subsection 12 is repeating, it is possible to monitor the same graphical element inline and throughout the manufacturing process.

The inspection unit 23 is further configured to determine a delta between the actual measured Lab values 32 and a targeted Lab set 31. In Fig. 2, the targeted Lab set 31 is provided by a separate capturing device 25 capturing an image of a reference subsection 11, or first section 11, preferably comprising the same graphical element being part of the subsection 12. The separate capturing device 25 may be comprised in the same inspection unit 23. The targeted Lab set 31 may alternatively be provided by the same capturing device as the one being configured to capture the actual measured Lab values 32, or by a computer, server, image library or other means.

The digital print module 20 is configured to be calibrated based on the delta (i.e. difference) between the actual measured Lab values 32 and the targeted Lab set 31. In Fig. 1, this is achieved by a CM module being configured to perform color management based on the delta. Alternatively, a CM module may be provided in, or in conjunction with (such as remote from) the inspection unit 23. The targeted Lab set 31 preferably comprises the same image motif as the image motif printed on the subsection 12. As an example, if the paperboard web 10 is dynamically printed with variable images after each other, a specific image out of the variable images, corresponding to the targeted Lab set 31 provided to the inspection unit 23, may be selected for capturing the actual measured Lab values 32. As another example, the targeted Lab set 31 may be a color control mark, and the subsection 12 may correspond to a color control mark printed on each section such that regardless of what is printed on the rest of the section.

The targeted Lab set 31 as well as the measured Lab values 32 preferably relate to graphical elements being part of the final product, i.e. the final packaging material used to form individual packaging containers. Hence, the targeted Lab set 31 as well as the measured Lab values 32 also relate to graphical elements being part of the visible décor on the final packaging container.

A controller (not illustrated) may be provided in, or in conjunction with (such as remote from), the converting unit 2 to control the operation of the inspection unit 23. For instance, the controller may be a digital processing unit or the like. The controller may also be in electronic communication with the feeding unit(s) 21 as well as the digital print module 20 to control their respective function.

The inspection unit 23 or the controller may be configured to analyze the actual measured Lab values 32 by comparing it with the targeted Lab set 31, the targeted Lab set 31 may represent 100% well-functioning digital print module 20. If the actual measured Lab values 32 comprises deviations from the targeted Lab set 31, these deviations may be processed and analyzed in order to determine color delta in the digital print module 20. In the simplified example of Fig. 2, it is illustrated how the paperboard web 10 at the start of the conversion process is printed with a dark color that gradually changes to light. When actual measured Lab values 32 are captured of a subsection 12 with a lighter (or darker, greener, redder, yellower, bluer) color than the initial color, it is compared with the targeted Lab set 31, and the delta is used to calibrate the digital print module 20, which after the calibration goes back to printing the previous color. As such, a second deviation between the first and a third section 11, 13 of the paperboard web 10 is smaller than a first deviation between the first and second section 11, 12 of the paperboard web 10. Beneficially, the in-line closed loop calibration system as illustrated is able to detect and correct the delta faster than a calibration system that is only able to calibrate the digital print module 20 offline.

Although not illustrated, the converting unit 2 may further comprise a drying station configured to dry the paperboard web 10 after printing S1. Further, the converting unit 2 may comprise a creasing station (not shown) configured to provide a crease line pattern to the printed paperboard web 10, and/or a lamination station (not shown) configured to laminate at least a further layer to the printed paperboard web 10 or the printed and creased paperboard web 10. After printing, drying, and creasing, the so formed laminated packaging material web 1 may be transferred to a cutting and/or folding station (not shown) to form a package.

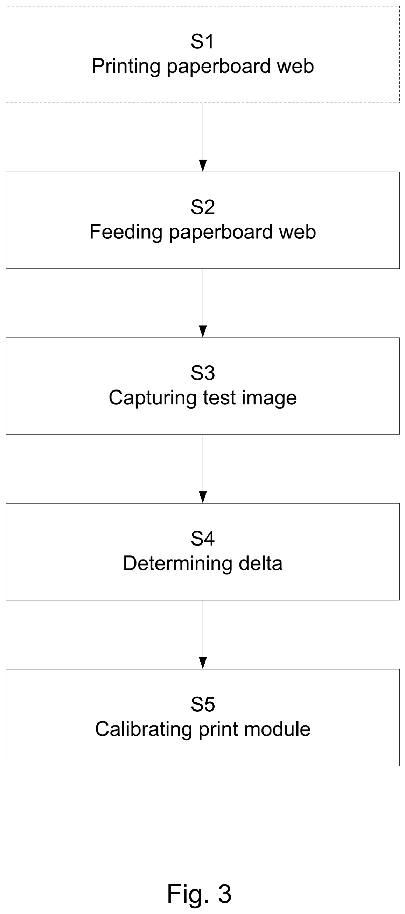

Turning now to Fig. 3, an embodiment of a continuous in-line method for closed loop calibration of a digital print module 20 is illustrated. By closed loop calibration, it is meant that the input used for calibration is a capture of the print provided by the output device, i.e., the digital print module 20. The method may be performed in the converting unit 2 as described above. Conversely, the converting unit 2 is configured to perform the method as will now be described. Moreover, all aspects disclosed with regard to the method may be implied also for the converting unit 2, as well as the other way around.

The method includes an optional step of printing S1 the paperboard web 10 using a digital print module 20, the digital print module 20 preferably comprising an ink-jet printer. During ink-jet printing, a digital image is recreated by propelling droplets of ink onto a substrate, such as a paperboard web 10 or a primer layer (not shown) on a paperboard web 10. The method may further comprise other printing techniques, such as flexographic printing, and the paperboard web 10 may hence be printed by ink-jet printing only, or by a hybrid approach combining two or more printing techniques. In other words, paperboard layer 10 may be ink-jet printed, and flexography printed. The paperboard layer 10 may comprise paper, paperboard, or other cellulose-based material.

The paperboard web 10 is fed S2 in a machine direction MD continuously, preferably at a substantially constant speed. The machine direction MD may be defined as the direction parallel to the movement of the paperboard web 10 through a manufacturing equipment such as a converting unit 2, or as the circumferential direction of a roll of paper used for providing the paperboard web 10.

Next, actual measured Lab values 32 are captured S3 of a test subsection 12 of the paperboard web. The actual measured Lab values 32 may be captured by a capturing device 24, such as a camera in the form of e.g. an RGB camera, comprised in an inspection unit 23 as discussed above.

A delta is determined S4 between the actual measured Lab values 32 and a targeted Lab set 31. The targeted Lab set 31 may be captured of a reference subsection 11 of the paperboard web 10. The targeted Lab set 31 may be computer generated and/or computer modified. The delta may comprise a shift in color. The targeted Lab set 31 may be the image used as input to the digital print module 20 during the step of printing S1.

The print module 20 is calibrated S5 based on the delta between the actual measured Lab values 32 and the targeted Lab set 31. Preferably, calibrating S5 the digital print module 20 comprises performing color management CM based on the delta. The targeted Lab set 31, the actual measured Lab values 32, the inspection unit 23 and/or the digital print module 20 may be associated with a color profile. Performing color management CM may comprise referencing color profile data.

Preferably, the paperboard web 10 is printed S2 continuously using the digital print module 20, and the step of printing S1 and feeding S2 the paperboard web 10 is performed simultaneously while calibrating S5 the digital print module 20.

From the description above follows that, although various embodiments of the invention have been described and shown, the invention is not restricted thereto but may also be embodied in other ways within the scope of the subject-matter defined in the following claims.

## Claims

1. Method for closed loop calibration of a digital print module (20), the method comprising:
feeding (S2) a printed paperboard web (10) continuously in a machine direction (MD),
capturing (S3) actual measured Lab values (32) of a test subsection (12) of the paperboard web (10), wherein the test subsection (12) forms part of a final décor of the paperboard web (10) and of a packaging container being produced by the paperboard web (10),
determining (S4) a delta between the actual measured Lab values (32) and a targeted Lab set (31),
calibrating (S5) the digital print module (20) based on the delta between the actual measured Lab values (32) and the targeted Lab set (31).

2. Method according to claim 1, further comprising printing (S1) the paperboard web (10) continuously using the digital print module (20), wherein the step of printing (S1) and feeding (S2) the paperboard web (10) is performed simultaneously while calibrating (S5) the digital print module (20).

3. Method according to claim 2, wherein the targeted Lab set (31) is used as input to the digital print module (20) during the step of printing (S1).

4. Method according to any one of the preceding claims, wherein calibrating (S5) the digital print module (20) comprises performing color management (CM) based on the delta between the actual measured Lab values (32) and the targeted Lab set (31).

5. Method according to any one of the preceding claims, further comprising capturing the targeted Lab set (31) of a reference subsection (11) of the paperboard web (10), wherein the reference subsection (11) forms part of a final décor of the paperboard web (10) and of a packaging container being produced by the paperboard web (10).

6. Method according to any one of the preceding claims, wherein the targeted Lab set (31) is computer generated and/or computer modified.

7. A converting unit (2) configured to continuously manufacture a laminated packaging material (1), comprising:
a digital print module (20) configured to print a paperboard web (10),
a feeding unit (21) configured to continuously forward the printed paperboard web (10) in a machine direction (MD),
an inspection unit (23) configured to capture actual measured Lab values (32) of a test subsection (12) of the paperboard web (10), wherein the test subsection (12) forms part of a final décor of the paperboard web (10) and of a packaging container being produced by the paperboard web (10), and to determine a delta between the actual measured Lab values (32) and a targeted Lab set (31),
wherein the digital print module (20) is configured to be calibrated based on the delta between the actual measured Lab values (32) and the targeted Lab set (31).

8. The converting unit (2) according to claim 7, wherein the inspection unit (23) is further configured to capture the targeted Lab set (31).

9. The converting unit (2) according to claim 8, wherein the targeted Lab set (31) corresponds to a reference subsection (11) of the paperboard web (10).

10. The converting unit (2) according to claim 9, wherein the reference subsection (11) forms part of a final décor of the paperboard web (10) and of a packaging container being produced by the paperboard web (10).

11. The converting unit (2) according to any of claims 7-10, further comprising a color management (CM) module configured to perform color management based on the delta between the actual measured Lab values (32) and the targeted Lab set (31).

12. A digitally printed paperboard web (10) for forming a laminated packaging material (1), obtainable by closed loop calibration of a digital printer module (20) used for printing the paperboard web (10) using the method of any of claims 1-6 and/or the converting unit (2) according to any of claims 7-11, wherein a first deviation between a first and second section (11, 12) of the paperboard web (10) is used to calibrate the printer module (20) such that a second deviation between the first and a third section (11, 13) of the paperboard web (10) is smaller than the first deviation.
